# EUROPEAN PATENT APPLICATION

(11) **EP 4 170 777 A1**
(43) Date of publication of application: **26.04.2023**
(21) Application number: 21203912.7
(22) Date of filing: 21.10.2021
(51) Int. Cl.: H01M 10/613, F16L 9/147, F16L 13/14, F28D 7/00, H01M 10/6556, H01M 10/6557

(54) **FLOW RESTRICTOR**

(71) Applicant: Rimac Automobiles Ltd., 10431 Sveta Nedelja (HR)
(72) Inventor: Milanovic, Niko, 31500 Nasice (HR)
(74) Representative: Hoffmann Eitle

(57) **Abstract**

A cooling system for a battery module, said cooling system comprising: at least one flow tube adapted to receive a cooling fluid, wherein the material of the at least one flow tube is a polymer-based material, and a member attached on the inner wall of at least a part of the at least one flow tube, wherein the material of the member is a metal, said member being sized such as to reduce the flow of the cooling fluid through the at least one flow tube to thereby achieve a balanced flow.

## Description

### Technical field

The present invention relates to the technical field of cooling systems. More specifically, the present invention relates to a cooling system for cooling a heat generating component.

### Background

Cooling systems are commonly used in various applications, for example in various domestic or commercial applications, for cooling one or more heat generating components.

For example, a common environment where cooling systems are regularly employed are battery packs. Battery packs normally comprise one or more battery modules and each battery module comprises tens, hundreds or even thousands of battery cells densely packed within a limited space of the battery module.

Such battery packs play an increasing role in renewable energy usage and storage. As an example, in the recent years the popularity and wide use of motor vehicles that entirely or at least in part use electric power stored in one or more such battery packs for propulsion, such as electric vehicles or hybrid vehicles, has increased significantly such that these motor vehicles tend to replace the conventional fuel-based vehicles. However, also the conventional fuel-based vehicles may use one or more such battery packs as motor vehicle starter battery.

During operation, the battery cells need to be cooled in order to remove the heat produced by the battery cells from the environment of the battery cells and to therefore maintain the temperature of the battery cells at a stable level. The temperature of the battery cells is critical for the performance of the battery cells, for example for the charge and discharge capacity of the battery cells. The temperature of the battery cells and in particular the temperature management of the battery cells affects also the lifetime of the battery cells and accordingly the lifetime of the battery module. Hence, efficient cooling of the battery cells is crucial for the performance of the battery cells.

Therefore, in general, the battery packs are provided with a cooling system comprising one or more cooling channels normally formed by one or more plastic tubes through which a cooling fluid (also called a coolant) is routed for cooling the battery modules and hence the battery cells.

In the cooling system normally, it is desired to have a balanced flow distribution of the cooling fluid inside the cooling system or more particularly inside the one or more cooling channels through which the cooling fluid is flowing. Such balanced flow distribution can be obtained by arranging a member with a predetermined size and/or shape also called flow restrictor at one or more predetermined positions within the one or more plastic tubes through which the cooling fluid is flowing. However, since normally the flow restrictor is attached at one or more predetermined positions within the one or more plastic tubes with gluing, the cooling fluid may detach the flow restrictor which will disrupt the flow of the cooling fluid or will even block the flow of the cooling fluid.

On the other hand, it is also desirable that the cooling system and in particular the one or more plastic tubes are robust to external influences and in particular external mechanical influences for example under application of a clamping force when mounting a clamp on the outer wall of the plastic tube. The plastic tube is in general not robust to the applied clamping force and the applied clamping force may easily cause cracks and/or openings in the plastic tube which may lead to leaking of cooling fluid from the plastic tube or may even lead to crushing of the plastic tube.

Therefore, there is a need for providing a cooling system in which balanced flow distribution of the cooling fluid in the one or more cooling channels is achieved while disruption of flow of the cooling liquid is prevented and the robustness of the cooling system to external mechanical influences is increased.

Hence, it is an object of the present invention to provide for a cooling system in which balanced flow distribution of the cooling fluid in the one or more cooling channels is achieved while disruption of the flow of the cooling fluid is prevented and the robustness of the cooling system to external mechanical influences is increased.

### Summary

The mentioned problems and drawbacks are addressed by the subject matter of the independent claims. Further preferred embodiments are defined in the dependent claims.

According to an aspect of the present invention there is provided a cooling system comprising: at least one flow tube adapted to receive a cooling fluid, wherein the material of the at least one flow tube is a polymer-based material, and a member attached on the inner wall of at least a part of the at least one flow tube, wherein the material of the member is a metal, said member being sized such as to reduce the flow of the cooling fluid through the at least one flow tube to thereby achieve a balanced flow.

According to a further aspect of the present invention there is provided a method of manufacturing a cooling system , said method comprising: providing at least one flow tube adapted to receive a cooling fluid, wherein the material of the at least one flow tube is a polymer-based material, and attaching a member on the inner wall of at least a part of the at least one flow tube, wherein the material of the member is a metal, said member being sized such as to reduce the flow of the cooling fluid through the at least one flow tube to thereby achieve a balanced flow.

According to a still further aspect of the present invention there is provided the cooling system according to the first aspect, said cooling system being provided in a battery pack, said battery pack comprising one or more battery modules, each battery module comprising a plurality of battery cells.

### Brief description of the drawings

Embodiments of the present invention, which are presented for better understanding the inventive concepts, but which are not to be seen as limiting the invention, will now be described with reference to the figures in which:
- Figure 1: shows a schematic view of a cross-section of a general cooling system as in the conventional arts as well as an environment for employing embodiments of the present invention;
- Figure 2: shows a schematic view of a cross-section of the cooling system according to an embodiment of the present invention;
- Figure 3A: shows a schematic view of a cross-section of the cooling system according to an embodiment of the present invention;
- Figure 3B: shows a schematic view of the cooling system according to an embodiment of the present invention;
- Figure 4: shows a flow chart of a general method embodiment of the present invention;
- Figure 5: shows schematically a cooling system according to the embodiment of the present invention, said cooling system being provided in a battery pack as an environment for the application of the present invention.

### DETAILED DESCRIPTION

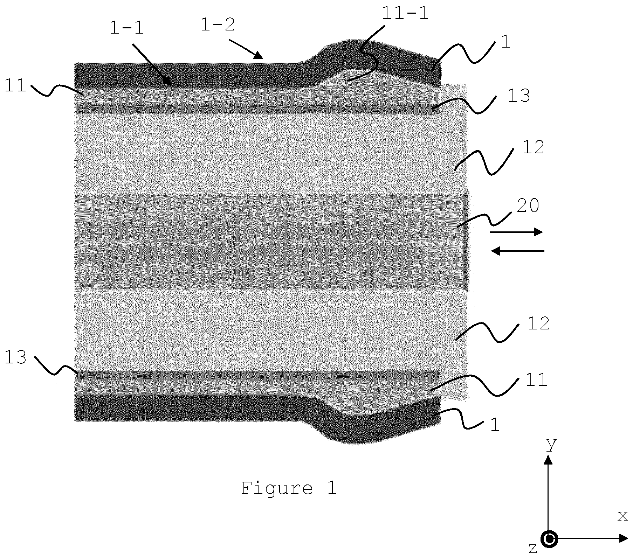

Figure 1 shows a schematic view of a cross-section of a general cooling system also called here below a cooling arrangement as in the conventional arts as well as an environment for employing embodiments of the present invention. It is to be understood that details of the cooling system described here below are also applicable to the cooling system of embodiments of the present invention described further below.

The cooling system (cooling arrangement) comprises at least one flow tube 1 (a part of one flow tube 1 being shown in figure 1) adapted to receive a cooling fluid. In figure 1 there is shown the flow tube as extending along the x direction (this direction of extension of the flow tube being also called a longitudinal direction here below). The cross-section is along a direction (y direction in figure 1) which is orthogonal to the longitudinal direction (x direction). In figure 1 there is shown the cross-section when viewed along a further direction which is orthogonal to the longitudinal direction of the flow tube and the y direction, said direction denoted as z direction in figure 1. The flow tube 1 has an inner wall 1-1 and an outer wall 1-2 and a specific thickness between the inner wall 1-1 and the outer wall 1-2. The flow tube forms a cooling channel 20 through which a cooling fluid can flow.

The cooling system may comprise one flow tube 1, as it is shown in figure 1, but may also comprise more than one flow tubes 1 connected with each other such that one or more cooling channels 20 extending in one or more directions are formed. The number of flow tubes 1 and accordingly, the number of cooling channels 20, may depend on the specific structure of the environment in which the cooling system is provided. For example, when the cooling system is provided in an environment for cooling battery cells, and more specifically is provided in a battery pack comprising one or more battery modules, each battery module comprising a plurality of battery cells, the number of cooling channels 20 may depend, for example, on the number of battery modules in the battery pack and/or the number of battery cells housed in each one of the battery modules and/or their arrangement with respect to each other and/or the battery module and/or their direction of extension, and/or the arrangements of the one or more battery modules in the battery pack and similar.

The flow tube 1 may have a cylindrical shape and accordingly circular cross-section but may also have at least in part other shape with other cross-section if needed.

Normally, the material of the at least one flow tube 1 is a polymer-based material. The term polymer-based material is to be understood in the context described here below as pure polymer material or as a composite material comprising polymer material and a non-polymer material. The pure polymer material may be natural polymer or man-made polymer such as semi-natural or purely synthetic polymer. For example, the material of the at least one flow tube 1 may be plastic.

The polymer-based flow tube 1 (for example plastic tube) is in general not robust to applied external force such as mechanical force, for example clamping force applied when mounting a clamp to the flow tube 1. The clamp is normally mounted to connect two flow tubes 1 together or to mount the flow tube 1 on a predetermined position in the environment in which the cooling system is provided.

To increase the robustness of the flow tube 1 a member such as a metal insert 11 is attached to the flow tube 1 on the inner wall 1-1 of the flow tube 1. The attaching of the metal member 11 to the inner wall 1-1 of the flow tube 1 may be performed by press-fitting. When applying press-fitting the metal insert 11 is mechanically pressed in the flow tube 1 (or more specifically in the inner wall 1-1 of the flow tube 1) such that the shape of the flow tube 1 follows the shape of the metal insert 11. For this, the inner diameter of the flow tube 1 is for a predetermined value smaller than the outer diameter of the metal insert 11. The metal insert 11 may also have a cylindrical shape with accordingly circular cross section when the flow tube has a cylindrical shape as elaborated above but may also have other suitable shape if needed. The metal insert 11 may have smooth outer wall but may also have one or more protrusions 11-1 on the outer wall as shown in figure 1. Such one or more protrusions 11-1 may facilitate the connection formed by press-fitting between the flow tube 1 and the metal insert 11. The metal insert 11 acts as a crush support for the flow tube 1 reducing the risk or even preventing thereby crashing of the flow tube 1 when external clamping force or other mechanical force is applied to the outer wall 1-2 of the flow tube 1. The metal insert 11 is in general and preferably located only in part of the flow tube 1, preferably near the end of the flow tube 1 and preferably has straight inner wall without bends in the longitudinal direction.

On the metal insert 11 (and more specifically on the inner wall of the metal insert 11) the above described flow restrictor 12 is attached for balancing the flow distribution of the cooling fluid. The attachment is normally performed by use of an adhesive 13 applied between the metal insert 11 and the flow restrictor 12. In other words, normally the flow restrictor 12 is glued to the metal insert 11.

However, in such cooling system in which adhesive 13 is used for gluing the flow restrictor 12 to the metal insert 11 the cooling fluid which is in direct contact with the flow restrictor 12 can unstick or detach the flow restrictor 12 from the metal insert 11 and the detached flow restrictor 12 may cause disruption of the cooling fluid flow or even block the cooling fluid flow in the flow tube 1.

Therefore, the present invention aims at providing a cooling system, also called a cooling arrangement here below, in which balanced flow distribution of the cooling fluid is achieved while disruption of a cooling fluid flow is prevented and the robustness of the cooling system to external mechanical influences is increased. The cooling system 100 (cooling arrangement) according to the present invention may be provided in different environments, as elaborated further below, for cooling one or more heat generating components.

For this, according to the present invention the two members i.e. the metal insert 11 and the flow restrictor 12 are replaced for enabling the two functions of crash support and balanced flow distribution with one member that performs both functions. This also eliminates the need for use of the above-described adhesive 13 and hence eliminates the risk of the flow restrictor 12 elaborated above to unstick or detach from the metal insert 11 to thereby disrupt the cooling fluid flow.

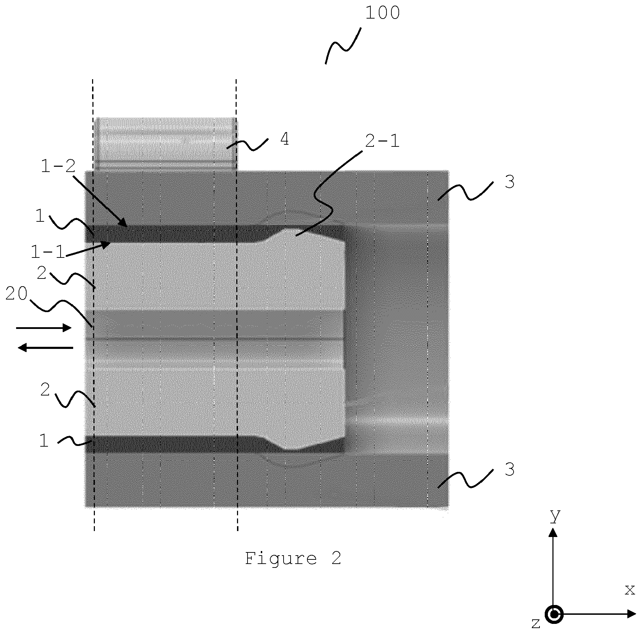

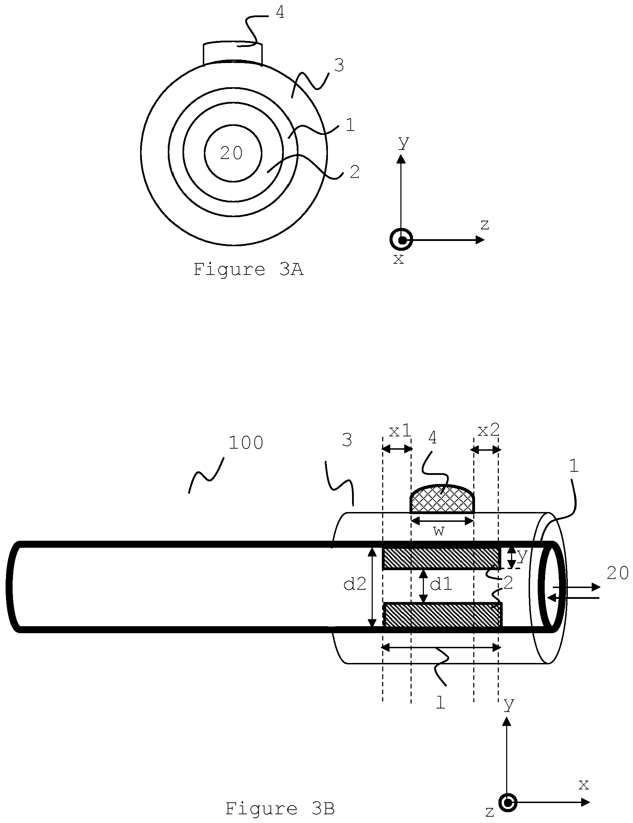

Figure 2 shows a schematic view (when viewed along the z direction denoted in the figure) of a cross-section of the cooling system 100 (cooling arrangement) according to an embodiment of the present invention. Figure 3A shows a schematic view (when viewed along the x direction denoted in the figure) of the cross-section of the cooling system according to the embodiment of the present invention. Figure 3B shows a schematic view of further details of the cooling system according to the embodiment of the present invention.

The cooling system 100 according to the embodiment of the present invention comprises at least one flow tube 1 adapted to receive a cooling fluid. The material of the at least one flow tube 1 is a polymer-based material. The same elaborations regarding the at least one flow tube 1 from above apply to the embodiment of the present invention described here below as well.

The cooling system 100 comprises further a member 2 attached on the inner wall 1-1 of at least a part of the at least one flow tube 1. The material of the member 2 is a metal. In this way, by the material of the member 2 being metal the member 2 acts as a crush support and increases the robustness of the flow tube 1. Accordingly, a cooling channel 20 is formed in the at least one flow tube 1 on which inner wall the member 2 is attached through which cooling fluid can flow. The member 2 may be attached on different positions on the inner wall of the flow tube 1. Preferably, the member 2 is attached on the inner wall 11-1 at one end position (end portion) of the flow tube 1 as shown for example in figure 3B. A further member 2 may also be attached on the other end position (end portion) of the flow tube 1.

The member 2 may also have a cylindrical shape and circular cross section (as shown in figure 3A) when the flow tube 1 has a cylindrical shape as elaborated above. The member 2 may have smooth outer wall which is uniform along its length (1) in the longitudinal direction (x direction in figure 1 and figure 3B) but may also have one or more protrusions 2-1 on the outer wall as shown in figure 2. Preferably the member 2 has straight inner wall without bends in the longitudinal direction.

The member 2 is sized such as to reduce the flow of the cooling fluid (when flowing) through the at least one flow tube 1 to thereby achieve a balanced flow. As it is shown in figure 3B the member 2 has an outer diameter (denoted as d2 in figure 3B) and an inner diameter (denoted as d1 in figure 3B). The inner diameter (d1) of the member 2 is sized such as to reduce the flow of the cooling fluid (when flowing) through the at least one flow tube 1 to thereby achieve a balanced flow. In other words, the size of the member 2 and more specifically the size of the inner diameter (d1) of the member 2 may be chosen in accordance with the requirements for speed of flowing of the cooling fluid in the cooling system 100 and/or pressure in the cooling system 100. More specifically, the size of the inner diameter (d1) of the member may be chosen such as to provide for a reduced or a limited flow of the cooling fluid in the cooling channel 20 and a reduced pressure in the cooling channel 20. The term balanced flow is to be understood as a flow characterized at least in part of the flow tube 1 with an adjusted and stable flow rate of the cooling fluid.

The member 2 is attached to the inner wall 1-1 of the flow tube 1 by press-fitting. The same elaborations regarding press-fitting from above apply here as well. More specifically, the inner diameter 1-1 of the flow tube is for a predetermined value smaller than the outer diameter (d2) of the member 2 such that when the member 2 is press-fitted in the flow tube 1 the flow tube 1 at least in the part in which the member 2 is press-fitted takes the shape of the member 2. For example when the member 2 is provided with one or more protrusions 2-1 on the outer wall as shown in figure 2, said one or more protrusions 2-1 facilitating the contact between the flow tube 1 and the member 2, the flow tube at least in the part in which the member 2 is press-fitted takes a shape that follows the shape of the one or more protrusion 2-1 on the outer wall of the member 2.

The member 2 being attached on the inner wall of at least a part of the at least one flow tube 1 in one embodiment of the present invention means that the inner wall 1-1 of the flow tube 1 is in a direct contact with the outer wall of the member 2. The member 2 being attached on the inner wall of at least a part of the at least one flow tube in other embodiment of the present invention means that the inner wall 1-1 of the flow tube 1 is in contact with the outer wall of the member 2 via a further layer. Such further layer may be for example a layer that facilitates the connection via press-fitting between the flow tube 1 and the member 2.

As elaborated above the material of the member 2 is metal. The metal may be chosen in accordance with the type of cooling fluid flowing through the cooling channel. In other words, the metal may be chosen such that the cooling fluid is not able to make a damage, for example to cause corrosion of the metal, since the cooling fluid is in direct contact with the member 2. For example, the metal may be stainless steel or an appropriate alloy not being sustainable to corrosion or other damage caused by the cooling fluid.

The member 2 has a predetermined thickness. Thickness of the member is to be understood as the dimension of the member 2 between the inner wall of the member 2 and the outer wall of the member 2 in the direction perpendicular to the longitudinal direction of the flow tube (y direction in figure 2, figure 3A and figure 3B). In figure 3B the thickness of the member 2 is denoted with y. The thickness (y) of the member 2 may be uniform along the length of the member which is along the longitudinal direction of the flow tube 1 (the length of the member being denoted with 1 in figure 3B) or may be at least in parts non-uniform. The thickness (y) of the member 2 may be non-uniform due to the provision of the one or more protrusions 2-1 as elaborated above. The thickness (y) of the member is determined depending on the degree of robustness the member should provide to the flow tube. A member 2 with a larger thickness may increase the robustness of the flow tube 1, however, may also increase the weight of the flow tube 1 and may reduce significantly the flow of the cooling fluid in the cooling channel 20.

As elaborated above, the inner diameter (d1) of the member 2 is chosen to have a predetermined value such as to reduce the flow of the cooling fluid through the at least one flow tube to thereby achieve a balanced flow.

Therefore, the thickness (y) of the member 2 may be chosen such that a balance is achieved between the reduction of the flow of the cooling fluid and the robustness the member 2 provides to the flow tube 1.

The cooling system 100 comprises further a hose 3 arranged around the outer wall 1-2 of the flow tube 1. The hose 3 is arranged in the part of the flow tube 1 where the member 2 is arranged. The material of the hose 3 is a flexible material having at least the ability to bend such as for example rubber or a silicon-based material. The hose 3 may be arranged directly on the outer wall 1-2 of the flow tube 1 or may be arranged via an intermediate layer on the outer wall 1-2 of the flow tube 1. Such intermediate layer may be, for example, an intermediate layer that facilitates the arrangement of the hose 3 around the outer wall 1-2 of the flow tube 1.

The cooling system 100 comprises further at least one clamp member 4. The at least one clamp member 4 is arranged at a predetermined position on the outer wall of the hose 3.

The predetermined position overlaps, at least in part, with the part of the flow tube 1 on which the member 2 is arranged on the inner wall of the flow tube 1. The overlap is shown in figure 2 with the two vertical dashed lines, said vertical dashed lines serving as a guidance for the eye. In figure 3B there is shown more details of the overlap. The overlap is shown in figure 3B with the vertical dashed lines, said vertical dashed lines serving as a guidance for the eye.

As elaborated above, the clamp member 4 may be used, for example, to connect two flow tubes 1 together or to mount the flow tube 1 on a predetermined position in the environment in which the cooling system 100 is provided. For example, the clamp member 4 may be used to connect the flow tube 1 to a specific part for distribution of the cooling fluid in the flow tube 1, for example an inlet member and/or an outlet member.

Such inlet member and outlet member may be configured to be connected to feedline pipes or further tubes for distribution of the cooling fluid. The cooling fluid may be stored in a cooling fluid tank. The cooling fluid may be supplied in the at least one flow tube 1 through the inlet member and leave the at least one flow tube 1 through the outlet member. The cooling fluid that leaves through the outlet member may be stored in a different cooling tank or the same cooling tank. A pump may be used for distributing the cooling fluid. The cooling fluid may be water, oil, a mixture thereof or other suitable cooling fluid.

The clamp member 4 may be made from a metal or a metal-based material and is arranged to be mounted at the predetermined position by applying external mechanical force, also called a clamping force. The clamp member 4 is arranged on the outer wall of the hose 3 preferably along the entire circumference of the hose 3. The hose 3 enables that the clamp member 4 is not arranged directly on the rigid flow tube 1 which may damage the rigid flow tube 1 and serves as a connection point for arranging the clamp member 4 on the flow tube 1. In this way, the combination of the hose 3 and the clamp member 4 serves to prevent leakage of the cooling fluid when flowing through the flow tube 1.

The length of the member 2 (l) is larger for a predetermined value than the width (w) of the clamp member 4 in the longitudinal direction of the flow tube 1 as shown in figure 3B. Preferably, the clamp member 4 is arranged such that at least a part of the member 2 extends on both sides of the clamp member 4 below the clamp member 4 in the longitudinal direction of the flow tube 1. In figure 3B there is shown the member 2 extending for a length x1 and for a length x2 on both sides of the clamp member 4 below the clamp member 4. In other words, in figure 3B the clamp member 4 is arranged such that the length (l) of the member 2 is substantially equal to the sum of the width of the clamp member 4 (w) in the longitudinal direction and the two lengths x1 and x2.

The thickness (y) of the member 2 is determined depending on the clamping force to be applied when arranging the clamp member and hence is determined depending on the degree of robustness the member 2 should provide to the flow tube as elaborated above.

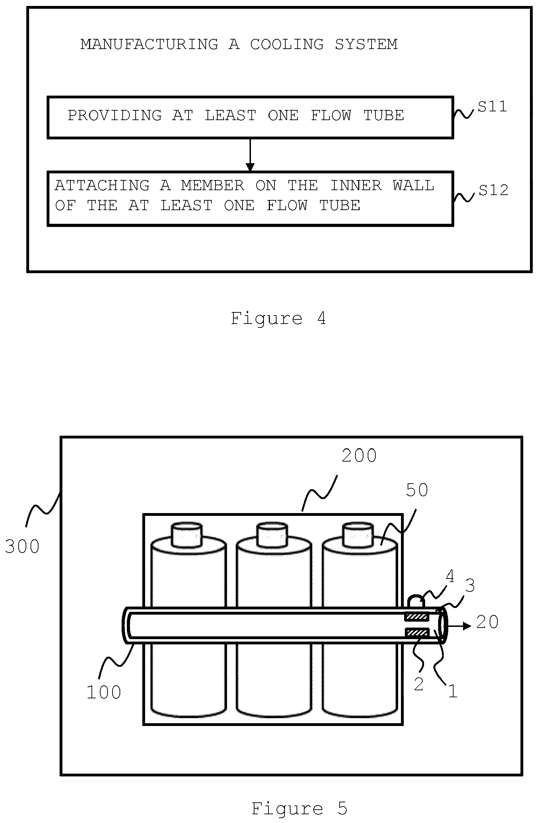

Figure 4 shows a flow chart of a general method embodiment of the present invention. Specifically, there are shown the steps of a method of manufacturing a cooling system 100 according to the embodiment of the present invention. The method is comprising the steps of: providing (S11) at least one flow tube adapted to receive a cooling fluid, wherein the material of the at least one flow tube is a polymer-based material, and attaching (S12) a member on the inner wall of at least a part of the at least one flow tube, wherein the material of the member is a metal, said member being sized such as to reduce the flow of the cooling fluid through the at least one flow tube to thereby achieve a balanced flow.

Figure 5 shows schematically an environment in which the cooling system according to the present invention may be used. More specifically there is shown in figure 5 the cooling system according to the present invention being provided (by being mounted) in a battery pack 300. The battery pack 300 comprises one or more battery modules 200 (one being shown in figure 5) and each battery module 200 comprises a plurality of battery cells 50. The cooling system according to the present invention is thereby arranged to cool the one or more battery modules 200 and hence to cool the plurality of battery cells 50 mounted in each one of the one or more battery modules 200. Even though the cooling system 100 is shown in figure 5 as being provided on one side of the shown battery module 200 it is to be understood that in one or more embodiments of the present invention the cooling system 100 may be provided in one or more other arrangements as well, for example around the battery module 200, on top of the battery module 200 or below the battery module 200 and similar, all such arrangements being invoked by the specific construction requirements of the battery module 200 and the battery pack.

The battery pack 300 may be mounted in a vehicle. The vehicle may be an electric vehicle but may also be a hybrid vehicle or a conventional fuel-based internal combustion vehicle.

The cooling system 100 according to the present invention may be used and accordingly provided also in environment other than a battery pack. For example, the cooling system 100 according to the present invention may be provided in the vehicle for cooling other heat generating components of the vehicle or may be provided in environment other than a vehicle.

In general, the cooling system 100 according to the present invention may be provided in various environments for cooling one or more heat generating components where cooling via a distribution of a cooling fluid is needed and applied.

Although detailed embodiments have been described, these only serve to provide a better understanding of the invention defined by the independent claims and are not to be seen as limiting.

## Claims

1. A cooling system comprising:
at least one flow tube adapted to receive a cooling fluid, wherein the material of the at least one flow tube is a polymer-based material, and
a member attached on the inner wall of at least a part of the at least one flow tube, wherein the material of the member is a metal, said member being sized such as to reduce the flow of the cooling fluid through the at least one flow tube to thereby achieve a balanced flow.

2. The cooling system of claim 1,
wherein the member is attached on the inner wall of the at least one flow tube by press-fitting.

3. The cooling system of claim 1 or claim 2, further comprising
a hose arranged around the outer wall of the at least one flow tube, wherein the material of the hose is a silicone-based material.

4. The cooling system of any one of claims 1 to 3, further comprising
a clamp member arranged at a predetermined position on the outer wall of the hose.

5. The cooling system of claim 4, wherein the predetermined position overlaps, at least in part, with the part of the at least one flow tube on which the member is arranged on the inner wall of the at least one flow tube.

6. The cooling system of claim 4 or 5, wherein the length of the member is longer for a predetermined value than the width of the clamp member in a direction along the length of the at least one flow tube.

7. The cooling system of any one of claims 1 to 6, wherein the member has a predetermined thickness, wherein the thickness of the member is determined depending on the clamping force to be applied when arranging the clamp member.

8. The cooling system of any one of claims 1 to 7, wherein the member has an outer diameter and an inner diameter, wherein the inner diameter has a predetermined value such as to reduce the flow of the cooling fluid through the at least one flow tube to thereby achieve a balanced flow.

9. The cooling system of any one of claims 1 to 8, wherein the member is attached on the inner wall of an end portion of the at least one flow tube.

10. A method of manufacturing a cooling system, said method comprising:
providing at least one flow tube adapted to receive a cooling fluid, wherein the material of the at least one flow tube is a polymer-based material, and
attaching a member on the inner wall of at least a part of the at least one flow tube, wherein the material of the member is a metal, said member being sized such as to reduce the flow of the cooling fluid through the at least one flow tube to thereby achieve a balanced flow.

11. The cooling system according to any one of claims 1 to 9, wherein the cooling system is provided in a battery pack, said battery pack comprising one or more battery modules, each battery module comprising a plurality of battery cells.
